# EUROPÄISCHE PATENTSCHRIFT

(11) **EP 1 997 719 B1**
(45) Veröffentlichungstag und Bekanntmachung des Hinweises auf die Patenterteilung: **31.03.2010**
(21) Anmeldenummer: 08009874.2
(22) Anmeldetag: 30.05.2008
(51) Int. Cl.: B62D 25/04, B62D 21/15

(54) **Vorrichtung zur Erhöhung der Steifigkeit von Säulen eines Fahrzeugs**
Device to increase the rigidity of vehicle columns
Elément pour augmenter la rigidité des colonnes de véhicule

(30) Priorität: 01.06.2007 DE 102007025635
(43) Veröffentlichungstag der Anmeldung: 03.12.2008
(73) Patentinhaber: AUDI AG, 85045 Ingolstadt (DE)
(72) Erfinder: Schneidewind, Thomas, 89312 Günzburg (DE); Gerbrand, Jürgen, 71737 Kirchberg (DE); Durst, Karl, 91790 Thalmannsfeld (DE)
(74) Vertreter: Patzelt, Heike Anna Maria

(56) Entgegenhaltungen:
- EP-A- 1 316 409
- WO-A-2004/098820
- DE-A1-102004 008 006
- DE-A1-102004 010 161
- DE-B3-102004 056 359
- JP-A- 2005 161 938

## Beschreibung

Die Erfindung bezieht sich auf eine Vorrichtung zur Erhöhung der Steifigkeit von Säulen eines Fahrzeugs. Zur Überprüfung der Widerstandsfähigkeit des Dachbereichs hinsichtlich des Eindrückens am Scheibenrahmen im oberen Bereich der A-Säule gibt es Vorschriften, wie beispielsweise die FMVSS 216 Hierfür werden an definierten Messpunkten am Scheibenrahmen Stempelvorrichtungen angesetzt, die unter Einwirkung einer Stempelkraft einen bestimmten Stempelweg zurücklegen ohne dass die A-Säule versagt. Das heißt, kein tragendes Bauteil darf brechen. Um diese Vorschrift zu erfüllen ist es bisher notwendig für die A-Säule Stahl und/oder Aluminium zu verwenden, da diese Werkstoffe biegsam sind und eine hohe Bruchdehnung aufweisen. Bei manchen Karosserieaufbauten ist eine vertikale Querverstrebung zwischen der A-Säule und dem Türrahmen angebracht. Diese Querverstrebung dient dazu die Stabilität zu erhöhen und den Hebel zwischen der oben im Dachbereich an der A-Säule einwirkende Kraft und der Befestigung der A-Säule unten im Bereich des Kotflügels zu verkürzen.

Die DE 10 2004 010161 A1 beschreibt einen solchen Scheibenrahmen.

**Nachteilig** bei solchen Aufbauten war es, dass der Stempeltest bei A-Säulen aus einem Faserverbund-Kunststoff insbesondere aus Kohlenstofffasern die Vorschriften bezüglich der Dehnbarkeit nur schlecht erfüllen konnte, da diese Kunststoffe zu starr und zu spröde sind und deshalb eine wesentlich geringere Bruchdehnung aufweisen.

**Aufgabe der Erfindung** ist es eine A-Säule auch aus einem Material mit einer geringen Bruchdehnung aufzubauen, wobei der Aufbau so beschaffen sein soll, dass die Vorschriften zur Überprüfung der Widerstandsfähigkeit des Daches gegen Eindrücken erfüllt werden.

**Diese Aufgabe** wird dadurch **gelöst,** dass die A-Säule aus einem starren Faserverbundwerkstoff besteht, und dass die vertikale Querverstrebung zwischen A-Säule und Türrahmen als Deformationselement aufgebaut wird. Das heißt der Windschutzscheibenrahmen und insbesondere die A-Säule kann starr und biegesteif dimensioniert werden. Bei einer Krafteinwirkung am oberen Ende der A-Säule wird durch die Deformation der Querverstrebung der gesamte Scheibenrahmen nach unten, um die untere Befestigungsachse im Bereich des Kotflügels gedreht.

**Die Vorteile** bei einer solchen Vorrichtung bestehen darin, dass für den Windschutzscheibenrahmen insbesondere aber für die A-Säule auch starre Materialien wie beispielsweise Verbundfaser-Kunststoffe verwendet werden können.

**Weitere Vorteile und vorteilhafte Weiterbildungen** ergeben sich aus den Unteransprüchen. Hierbei erweist es sich als besonders vorteilhaft, wenn die A-Säule aus einem Kohlefaserverbund-Kunststoff hergestellt wird, der im Gegensatz zu den vergleichbaren Metallaufbauten aus Stahl oder Aluminium ein wesentlich geringeres Gewicht hat. Die Querverstrebung die bewirkt, dass die starre A-Säule die gewünschten Eigenschaften bezüglich der Bruchdehnung aufweist, kann entweder aus einem dehnfähigen Material, wie beispielsweise Stahl oder Aluminium hergestellt sein. Die Querverstrebung kann aber auch gewollte Schwachstellen, insbesondere Sollbruchstellen aufweisen, die bewirken, dass für die Querverstrebung auch starren Materialien, wie beispielsweise CFK, verwendet werden können.

Die Erfindung soll anhand eines Ausführungsbeispiels, das in den Figuren 1 bis 4 dargestellt ist, näher erläutert werden. Es zeigen:
- **Figur 1:**: Unverformte A-Säule aus Verbundfaser- Kunststoff mit Querverstrebung.
- **Figur 2**:: Verformte A-Säule aus Verbundfaser- Kunststoff mit biegsamer Querverstrebung.
- **Figur 3**:: Verformte A-Säule aus Verbundfaser- Kunststoff mit einer Querverstrebung, die Sollbruchstellen aufweist.
- **Figur 4**:: Verschiedene Querverstrebungen mit Sollschwachstellen

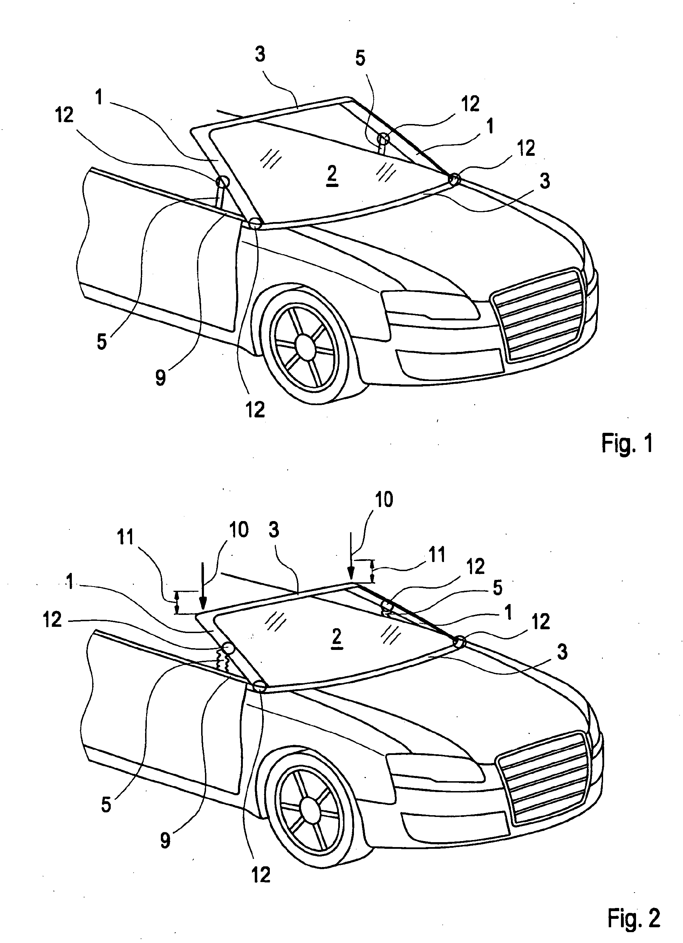

**Figur 1** zeigt eine A-Säule **1** aus Verbundfaser-Kunststoff mit einer Querverstrebung **5**. Bei dem hier dargestellten Fahrzeug handelt es sich um einen offenen Aufbau, wie es beispielsweise bei einem Cabriolet, Roadster oder Spider der Fall ist. Jedoch kann ein Aufbau mit einer A-Säule **1** aus einem starren bzw. spröden Material auch für Fahrzeuge verwendet werden, die über einen geschlossenen Dachrahmen verfügen, wie beispielsweise bei einer Limousine. Die Windschutzscheibe **2** des Fahrzeugs wird in einem Windschutzscheibenrahmen getragen. Dieser Rahmen besteht aus zwei A-Säulen **1** und zwei Querträgern **3.** Der Windschutzscheibenrahmen dient auch als eine Art Überrollbügel im Falle eines Fahrzeugüberschlags.
Insbesondere Kohlefaser-Verbundwerkstoffe (CFK) weisen bei einer geringen Dichte eine hohe Festigkeit auf. Aus diesem Grund kann die A-Säule **1** aus CFK oder anderen vergleichbaren Materialien schmäler und leichter aufgebaut werden, als eine vergleichbare metallische A-Säule. Durch die Verwendung von CFK kann auch das Fahrzeuggewicht vermindert werden. Die dünnere A-Säule **1** bewirkt auch, dass der Sichtwinkel in diesem Bereich vergrößert und der tote Sichtwinkel in diesem Bereich verkleinert wird. Durch die kleineren Abmessungen kann auch die Designfreiheit verbessert werden. Um bei einem Überschlag oder einer anderen Belastung im Bereich der oberen A-Säule **1** einen Teil der Aufprallenergie abzubauen ist eine Querverstrebung **5** zwischen der A-Säule **1** und einem in Längsrichtung ausgebildeten Karosserieteil **9** ausgebildet. Diese Querverstrebung **5** wird wie in den nachfolgenden Figuren dargestellt, durch die Aufprallenergie deformiert, da die starre A-Säule wie ein Hebel auf die Querverstrebung **5** wirkt. Die A-Säulen **1** weisen in einem unteren und mittleren Bereich Befestigungspunkte **12** auf, an denen der Scheibenrahmen mit der Karosserie verbunden ist.

**Figur 2** zeigt eine verformte A-Säule **1** aus Verbundfaser- Kunststoff mit einer biegsamen Querverstrebung **5** nach einer Krafteinwirkung F **10.** Hierbei wirkt eine Kraft F **10.** Die Kraft drückt auf die A-Säule **1,** die dann wie ein Hebel auf die Querverstrebung **5** einwirkt. Dadurch bewegt sich der obere Querträger **3** des Scheibenrahmens um den Stempelweg x **11** nach unten. Die Dimensionierung von Querverstrebung **5,** A-Säule **1** und Verbindungspunkten **12** muss so gestaltet sein, dass zuerst die Querverstrebung **5** deformiert wird bevor die A-Säule **1** auseinander bricht oder sich von den Verbindungspunkten **12** löst. Unter einer biegsamen Querverstrebung **5** versteht man in diesem Ausführungsbeispiel eine Querverstrebung **5** mit hoher Bruchdehnung, so dass die Aufprallenergie möglichst kontinuierlich an der Querverstrebung **5** abgebaut wird, bevor die A-Säule **1** bricht. Eine solche hohe Bruchdehnung weisen beispielsweise Metalle wie Aluminium und Stahl auf. Durch einen solchen Aufbau kann der Scheibenrahmen biegesteif dimensioniert werden. Der Scheibenrahmen dient dann als Hebel, welcher auf die Querverstrebung **5** einwirkt und an dieser Energie abbaut.

Alternativ zum Einsatz von Materialien, die eine stoffspezifische hohe Bruchdehnung aufweisen, kann auch die Querverstrebung mit anderen beliebigen starren Materialien aufgebaut werden. Dann aber muss die Querverstrebung konstruktive Maßnahmen beinhalten, die ein vergleichbares Deformationsverhalten bewirken. Diese konstruktiven Maßnahmen bestehen beispielsweise in dem Einbringen von Sollknickstellen oder Sollbruchstellen **8,** die eine definierte Materialschwächung bewirken.

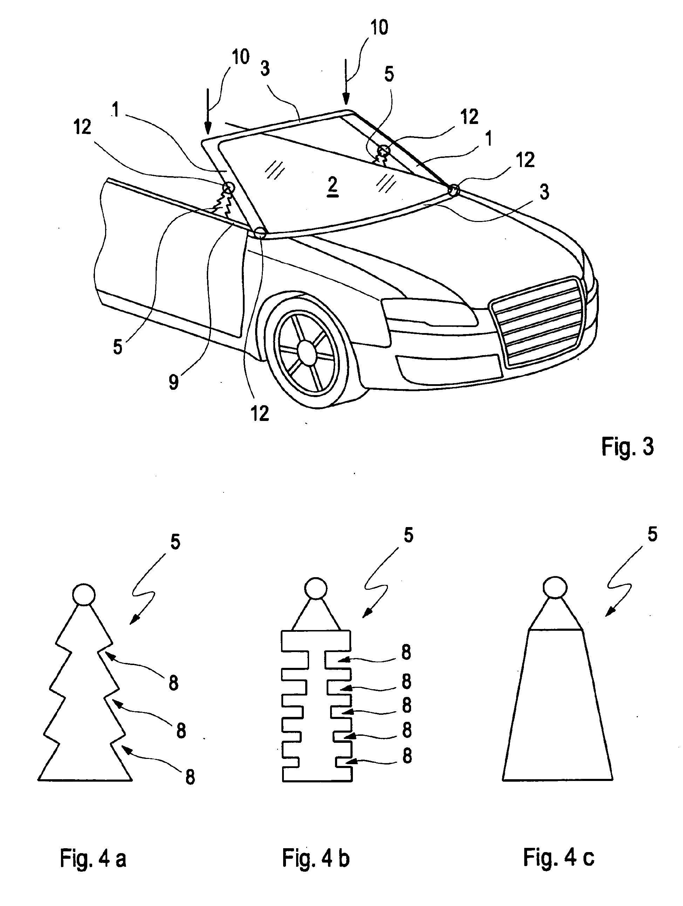

Ein solcher Aufbau ist in **Figur 3** dargestellt. Hier ist die Querverstrebung **5** tannenbaumförmig ausgestaltet. Diese Form bewirkt, dass der dünne Gipfel, der oben am Scheibenrahmen befestigt ist, zuerst deformiert wird. Besteht die Querverstrebung **5** aus einem spröden Material, so wird bei einer Belastung des Scheibenrahmens zuerst die Spitze abbrechen und dann werden nach und nach abhängig von der Belastung die weiteren Segmente abbrechen. Besteht die Querverstrebung **5** aus einem elastischeren Material, so wird bei einer Belastung des Scheibenrahmens zuerst die Spitze zusammengedrückt und dann werden nach und nach abhängig von der Belastung die weiteren Segmente zusammengedrückt.

**Figur 4** zeigt verschiedene Ausgestaltungsbeispiele der Querverstrebung. Hierbei können die Querverstrebungen **5** sowohl aus einem starren Faserverbundkunststoff oder einem anderen starren Werkstoff bestehen, der wie in Figur 4a und 4b dargestellt mit Materialverdünnungen bsw. Materialschwachstellen **8** versehen ist, die beispielsweise bei der Herstellung in der Form eingegossen werden oder nachträglich mittels einer Schneide in die Querverstrebung **5** eingebracht werden. Hierbei kann auch die Form der Querverstrebung **5** als materialschwächender Faktor mitberücksichtigt werden. Handelt es sich dagegen um eine metallene Querverstrebung **5,** so können alle bekannten beliebigen Formgebungen und Materialschwächungen **8** verwendet werden, die zur Aufnahme der Crashenergie von Metallkörpern dienen.
**Figur 4a** zeigt einen tannenbaumförmigen Aufbau der Querverstrebung **5.** Hier verjüngt sich zum einen der Querschnitt der Querverstrebung **5** von unten nach oben und es sind Schwachstellen **8** angebracht, die im Falle einer starren Querverstrebung bewirken, dass die Segmente kontinuierlich von oben nach unten abbrechen oder bei einem metallenen Aufbau von oben nach unten verformt werden, wenn die A-Säule **1** des Scheibenrahmens wie ein Hebel auf die Querverstrebung **5** einwirkt.
In **Figur 4b** wird dieses von oben nach unten wirkende Versagenskonzept dadurch erzielt, dass bei der säulenförmigen Querverstrebung **5** unterschiedlich große Einschnitte angebracht sind, wobei das herausgeschnittene Teil von oben nach unten immer kleiner wird, so dass zuerst der obere Teil deformiert wird und die Deformation von oben nach unten verläuft.
In **Figur 4c** wird eine dreieckige bzw. trapezförmige Querverstrebung **5** gezeigt. Dieser Aufbau besteht vorzugsweise aus Metall, weil bei diesem Aufbau ein Faserverbund-Kunststoff die Deformationsenergie nur sprunghaft und nicht kontinuierlich abgebaut wird.
Jedoch sind auch andere Formgebungen der Querverstrebung möglich.

## Patentansprüche

1. Scheibenrahmen für die Windschutzscheibe (2) eines Kraftfahrzeugs mit einer Querverstrebung (5) zwischen der A-Säule (1) des Scheibenrahmens und einem Karosserieteil (9), wobei die A-Säule (1) im Fall einer starken Krafteinwirkung (10) als Hebel auf die Querverstrebung (5) einwirkt, **dadurch gekennzeichnet, dass**
- die A-Säule aus einem starren Faserverbundwerkstoff besteht
- die Querverstrebung (5) als Deformationselement aufgebaut ist, und
- die Querverstrebung (5) mehrere Verformungszustände aufweist.

2. Scheibenrahmen mit einer Querverstrebung (5) nach Patentanspruch 1,
**dadurch gekennzeichnet, dass**
die Querverstrebung (5) aus einem Faserverbundwerkstoff besteht und mehrere Schwachstellen (8) aufweist, die bei einer Krafteinwirkung (10) knicken oder brechen

3. Scheibenrahmen mit einer Querverstrebung (5) nach Patentanspruch 1,
**dadurch gekennzeichnet, dass**
die Querverstrebung (5) aus Metall besteht und einen Querschnitt aufweist der sich nach oben hin verjüngt, so dass sich die Querverstrebung (5) bei einer Krafteinwirkung von oben nach unten verformt.

4. Scheibenrahmen mit einer Querverstrebung (5) nach Patentanspruch 2,
**dadurch gekennzeichnet, dass**
die Querverstrebung (5) einen Querschnitt aufweist, der sich nach oben hin verjüngt.

5. Scheibenrahmen mit einer Querverstrebung (5) nach Patentanspruch 3,
**dadurch gekennzeichnet, dass**
die Querverstrebung (5) mehrere Schwachstellen (8) aufweist, die sich bei einer Krafteinwirkung ein Falten oder Beulen der Querverstrebung (5) bewirken.

## Claims

1. Window frame for the windscreen (2) of a motor vehicle, having a cross strut (5) between the A-column (1) of the window frame and a body part (9), with the A-column (1) acting as a lever on the cross strut (5) in the event of an intense introduction of force (10), **characterized in that**
- the A-column is composed of a rigid fibre composite material,
- the cross strut (5) is constructed as a deformation element, and
- the cross strut (5) has a plurality of deformation states.

2. Window frame having a cross strut (5) according to Patent Claim 1,
**characterized in that**
the cross strut (5) is composed of a fibre composite material and has a plurality of weak points (8) which bend or break in the event of an introduction of force (10).

3. Window frame having a cross strut (5) according to Patent Claim 1,
**characterized in that**
the cross strut (5) is composed of metal and has a cross section which tapers in the upward direction, such that the cross strut (5) is deformed from top to bottom in the event of an introduction of force.

4. Window frame having a cross strut (5) according to Patent Claim 2,
**characterized in that**
the cross strut (5) has a cross section which tapers in the upward direction.

5. Window frame having a cross strut (5) according to Patent Claim 3,
**characterized in that**
the cross strut (5) has a plurality of weak points (8) which cause the cross strut (5) to fold or buckle in the event of an introduction of force.

## Revendications

1. Cadre de vitre pour le pare-brise (2) d'un véhicule automobile comprenant un renfort transversal (5) entre la colonne A (1) du cadre de vitre et une partie de carrosserie (9), la colonne A (1) agissant en tant que levier sur le renfort transversal (5) dans le cas d'une forte application de force (10),
**caractérisé en ce que**
- la colonne A se compose d'un matériau rigide composite renforcé par des fibres,
- le renfort transversal (5) est réalisé sous forme d'élément de déformation et
- le renfort transversal (5) présente plusieurs états de déformation.

2. Cadre de vitre comprenant un renfort transversal (5) selon la revendication 1,
**caractérisé en ce que**
le renfort transversal (5) se compose d'un matériau composite renforcé par des fibres et présente plusieurs points d'affaiblissement (8), qui fléchissent ou se cassent dans le cas de l'application d'une force (10).

3. Cadre de vitre comprenant un renfort transversal (5) selon la revendication 1,
**caractérisé en ce que**
le renfort transversal (5) se compose de métal et présente une section transversale qui se rétrécit vers le haut, de sorte que le renfort transversal (5) se déforme de haut en bas dans le cas de l'application d'une force.

4. Cadre de vitre comprenant un renfort transversal (5) selon la revendication 2,
**caractérisé en ce que**
le renfort transversal (5) présente une section transversale qui se rétrécit vers le haut.

5. Cadre de vitre comprenant un renfort transversal (5) selon la revendication 3,
**caractérisé en ce que**
le renfort transversal (5) présente plusieurs points d'affaiblissement (8) qui provoquent un pliage ou un gauchissement du renfort transversal (5) dans le cas de l'application d'une force.
